# DEMANDE DE BREVET EUROPEEN

(11) **EP 4 687 310 A1**
(43) Date de publication de la demande: **04.02.2026**
(21) Numéro de dépôt: 25192778.6
(22) Date de dépôt: 30.07.2025
(51) Int. Cl.: H04B 7/185

(54) **INFRASTRUCTURE DE COMMUNICATION CELLULAIRE NON-TERRESTRE**

(30) Priorité: 30.07.2024 FR 2408421
(71) Demandeur: THALES, 92190 Meudon (FR)
(72) Inventeur: GINESTE, Mathieu, 31037 TOULOUSE CEDEX 1 (FR); MATHIEU, Christophe, 92622 GENNEVILLIERS (FR); DARCHE, Davy, 92622 GENNEVILLIERS CEDEX (FR); STOECKLIN, William, 92622 GENNEVILLIERS CEDEX (FR); CLAUDEL, Guillaume, 31037 TOULOUSE CEDEX 1 (FR); BAUDOIN, Cédric, 31037 TOULOUSE CEDEX 1 (FR)
(74) Mandataire: Lavoix

(57) **Abrégé**

Cette Infrastructure (1) comporte : un réseau de transport (3) du type IP/MPLS comportant un réseau satellitaire (20) et un réseau terrestre, connectés par un lien d'alimentation ; un réseau 5G NTN (2), comportant une station de base désagrégée de part et d'autre d'une interface F1, associant une unité bord (RU, DU), dans la charge utile d'un satellite (21) connectée à un routeur bord (210) du réseau satellitaire, et une unité sol (CU) connectée à un routeur sol (260) du réseau terrestre ; le réseau de transport établissant un chemin entre le routeur sol et le routeur bord ; et, un centre de contrôle (50) pour commander une configuration des ressources du réseau de transport.

## Description

L'invention a pour domaine celui des réseaux cellulaires non-terrestres - NTN (« Non-Terrestrial Networks »), notamment ceux utilisant la technologie DVB ou, de préférence, ceux utilisant la technologie de 5^{e} génération - 5G, telle que normalisée par l'organisme de standardisation 3GPP (« 3rd Generation Partnership Project »).

Un réseau cellulaire non-terrestre intègre une couche satellitaire et une couche cellulaire.

La couche satellitaire comporte une constellation de satellites LEO ou MEO, dont les satellites sont connectés les uns aux autres pour former un réseau satellitaire du type réseau maillé. Chaque satellite constitue un noeud de ce réseau. Une liaison de données - ISL (« Link Access Layer ») entre deux noeuds de ce réseau est réalisée par un lien optique ou radio. De préférence, les communications sur le réseau satellitaire, c'est-à-dire le long des liaisons ISL, s'effectuent selon le protocole Ethernet. La couche satellitaire comporte aussi une fonction de contrôle des satellites et des ressources de la couche satellitaire, comme la charge utile de chaque satellite et les stations sol.

Le 3GPP produit des normes définissant les besoins, les architectures et les procédures de fonctionnement pour la couche cellulaire.

Si les premiers éléments normatifs en relation avec des réseaux cellulaires non-terrestres ont été définis dans la version 17 de la norme 5G (« Release 17 », complétée en juin 2022), le travail normatif se poursuit.

Ainsi, la couche cellulaire d'un réseau 5G NTN est étudiée plus spécifiquement dans les spécifications techniques 3GPP TS 38.300 et 3GPP TS 23.501 ainsi que dans les rapports techniques 3GPP TR 23.700-28, 3GPP TR 23.700-29, 3GPP TR 23.737, 3GPP TR 38.821.

Les dernières conclusions de ces études, ou recommandations, seront intégrées à la version 19 de la norme 5G, qui devraient être publiée en juin 2026.

Ces recommandations proposent notamment une architecture d'un réseau 5G NTN dans laquelle tout ou partie d'une station de base (aussi dénommée gNode-B ou gNB) est embarquée dans la charge utile d'un satellite et participe au traitement des paquets de données. On parle alors d'architecture régénérative. Le réseau 5G NTN régénératif peut réduire le nombre de stations sol et aussi fournir des services de connectivité avec des débits plus élevés qu'un réseau 5G NTN qui utiliserait les satellites uniquement pour retransmettre les paquets de données de manière transparente.

L'architecture régénérative utilise la flexibilité de l'architecture NG-RAN qui autorise différentes options de désagrégation d'un gNB de part et d'autre d'une interface normalisée :
- Une séparation couche haute du gNB (« Higher Layer Split » ou HLS), telle que spécifiée dans 3GPP TS 38.401 : un gNB est constitué d'un gNB-CU et d'un ou plusieurs gNB-DU(s), et l'interface entre gNB-CU et gNB-DU est dénommée F1 ;
- Une séparation couche basse (« Low Layer Split » ou LLS), telle que définie dans O-RAN Architecture Description : un gNB est constitué d'une fonction réseau O-DU et une fonction radio O-RU, et l'interface entre O-DU et O-RU est appelée Open FrontHaul. O-DU supporte les fonctions d'un gNB-DU comme spécifié dans 3GPP TS 38.401.

L'ensemble formé par les couches physiques RF et Low-PHY correspond à une unité radio gNB-RU ou O-RU (« Radio Unit »). Elles permettent l'établissement d'un lien de service Uu avec un équipement utilisateur - UE (« User Equipment »).

Avec cette séparation du gNB, les composants de la partie basse du gNB sont embarqués à bord d'un satellite et les composants de la partie haute du gNB sont au sol, dans une station au sol.

A partir de la station au sol, la partie haute du gNB se connecte à travers une interface NG à un coeur de réseau 5G - CN (« Core Network »), comportant par exemple une passerelle vers un réseau public, comme l'Internet.

Sachant que la charge utile d'un satellite reste contrainte en termes de capacités de calcul, le positionnement de la séparation dans l'empilement protocolaire présente l'avantage de pouvoir déporter des fonctions au sol, de manière à s'adapter à la capacité de traitement de la charge utile d'un satellite.

Les composants bas du gNB sont embarqués à bord d'un premier satellite de la constellation, qui dessert une cellule au sol et permet l'établissement d'une liaison utilisateur avec un équipement utilisateur UE présent dans cette cellule.

La station au sol est en liaison avec un second satellite de la constellation, par un lien dit d'alimentation, dénommé lien Feeder.

L'interface de séparation du gNB est donc établie le long du lien Feeder et d'une route à travers le réseau maillé reliant le premier satellite et le second satellite.

Contrairement au cas d'une constellation de satellites géostationnaires (Geostationary Earth Orbit - GEO), dans le cas d'une constellation de satellites non géostationnaires, en orbite basse (Low Earth Orbit - LEO) ou en orbite moyenne (Medium Earth Orbit -MEO), une cellule 5G NR fixe au sol n'est pas toujours desservie par le même premier satellite, à cause du défilement des satellites par rapport au sol. De la même manière, le même second satellite n'est pas toujours en visibilité de la station au sol. Par exemple, le temps caractéristique de la visibilité d'une cellule ou d'une station sol par un satellite LEO est de l'ordre de quelques minutes.

Or le 3GPP n'inclut pas, dans le périmètre de standardisation, la définition d'une infrastructure satellitaire mobile permettant la mise en œuvre de la séparation d'un gNB.

Le but de la présente invention est alors de proposer une infrastructure satellitaire mobile supportant une implémentation fonctionnelle de la séparation d'un gNB.

Par ailleurs, on connait les documents WO 2023/205544 A1 et du 3gpp, "3GPP; Technical Specification Group Radio Access Network; Solutions for NR to support NTN; release 16", 1 mars 2023 (2023-03-01), pages 1-140, XP093281319.

A cet effet, l'invention a pour objet une infrastructure de communication cellulaire non-terrestre selon les revendications annexées.

L'invention apparaîtra plus clairement à la lecture de la description qui va suivre, donnée uniquement à titre d'exemple non limitatif, et faite en référence aux dessins dans lesquels :
- La figure 1 est une représentation des options de séparation fonctionnelle d'une station de base gNB;
- La figure 2 est une représentation schématique d'un mode de réalisation préféré de l'architecture d'un réseau de communication cellulaire non terrestre selon l'invention ;
- La figure 3 est une représentation schématique d'un mode de réalisation préféré d'un procédé de fonctionnement ; et,

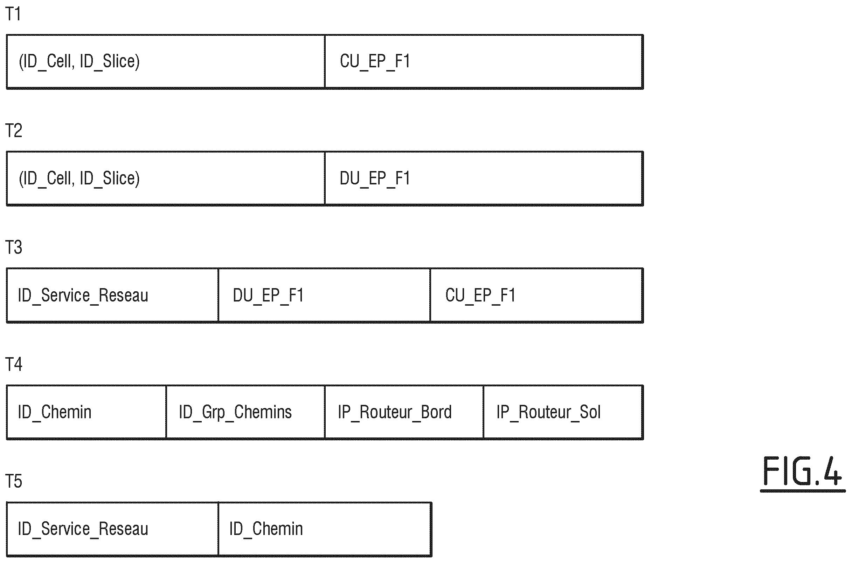

- la figure 4 indique la structure des différentes tables de correspondance entre identifiants utilisées dans l'infrastructure de la figure 2.

De manière générale, l'infrastructure selon l'invention comporte :
- un réseau de communication cellulaire, respectant le standard 5G NTN régénératif avec un réseau d'accès radio NG-RAN (« Next Generation Radio Access Network ») distribué, dans lequel les stations de base - gNB sont désagrégées (« desagregated ») de part et d'autre d'une interface de séparation, une unité bord d'un gNB étant à bord d'un satellite et une unité basse d'un gNB étant au sol ;
- un réseau de transport, qui interconnecte les composants du réseau d'accès radio distribué du réseau de communication cellulaire. Le réseau de transport fournit des services de transport qui permettent d'acheminer le trafic entre le bord et le sol à la granularité requise (définie par une pseudo-cellule), au moins celle une cellule 5G NR et avantageusement celle d'une tranche réseau radio (« slice ») par cellule 5G NR. Le réseau de transport fournit en particulier un service de transport MPLS. Il est dénommé réseau de transport MPLS dans ce qui suit (de manière connue en soi, le « network slicing », ou segmentation du réseau, est un service permettant de segmenter un réseau de communication cellulaire en plusieurs réseaux virtuels indépendants les uns des autres, appelés « slices » ou tranches ou segments. Chaque tranche est configurée pour répondre à des exigences spécifiques en matière de bande passante, de latence, de sécurité, etc. selon les besoins de l'application et/ou de l'utilisateur associé à ce service. Chaque tranche est avantageusement optimisée pour un usage particulier, garantissant par conséquent une qualité de service adaptée, une gestion des priorités de trafic, et une disponibilité dynamique des ressources) ;
- un centre de contrôle de gestion des ressources permettant d'orchestrer, à chaque instant de l'utilisation de l'infrastructure et de manière synchronisée, la configuration du réseau de communication cellulaire et celle du réseau de transport MPLS, en faisant l'hypothèse de cellules 5G NR fixes au sol et prédéfinies et qu'une cellule 5G NR est associée à la partie haute d'un unique gNB.

Cette combinaison spécifique de moyens permet d'assurer de manière automatisée la reconfiguration permanente qu'impose une constellation de satellites en mouvement par rapport au sol afin de maintenir la continuité des communications requise pour les utilisateurs. En effet, à cause du mouvement des satellites, une cellule 5G NR n'est couverte que temporairement par un satellite particulier et la station au sol embarquant la partie haute des gNBs n'est couverte que temporairement par un satellite particulier.

Cette reconfiguration dynamique s'effectue sans changement des adresses réseaux utilisées par les interfaces des fonctions du réseau de communication cellulaire.

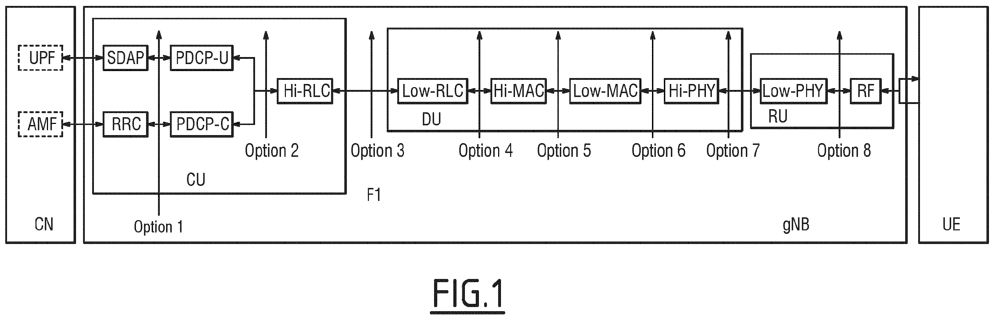

La figure 1 représente les différentes options possibles de séparation fonctionnelle d'un gNB.

Du bas vers le haut, un gNB est constitué d'un empilement protocolaire comportant par exemple :
- des fonctions RF ;
- des fonctions physiques basses, Low-PHY ;
- des fonctions physiques hautes, Hi-PHY ;
- une fonction MAC basse, Low- MAC;
- une fonction MAC haute, Hi- MAC;
- une fonction RLC basse, Low- RLC;
- une fonction RLC haute, Hi- RLC;
- une fonction PDCP du plan utilisateur, PDCP-U, associée à une fonction SDAP connectée à une fonction réseau UPF ;
- une fonction PDCP du plan de contrôle, PDCP-C, associée à une couche RRC et connectée à une fonction réseau AMF;

Les fonctions réseau UPF et AMF sont localisées dans un réseau coeur - CN (« Core Network) et les autres couches sont localisées dans un gNB et définissent un gNB.

L'infrastructure selon l'invention est compatible avec les deux séparations fonctionnelles du gNB indiquées en introduction de la présente demande.

Dans ce qui suit, l'invention sera plus particulièrement présentée dans le cadre d'une séparation couche haute - HLS. De préférence, l'option 3 de séparation est implémentée, comme illustré sur la figure 1. L'interface F1 est alors dans ce cas entre les couches Low-RLC et High-RLC.

L'interface est supportée par une couche de transport implémentée par le réseau de transport.

Le 3GPP considère que les spécifications du réseau de transport ne font pas partie du périmètre de standardisation de cette organisme, qui ne mentionne que la présence d'une couche de transport assurant la connectivité nécessaire aux fonctions du réseau de communication cellulaire dans les cas terrestre ou non terrestre.

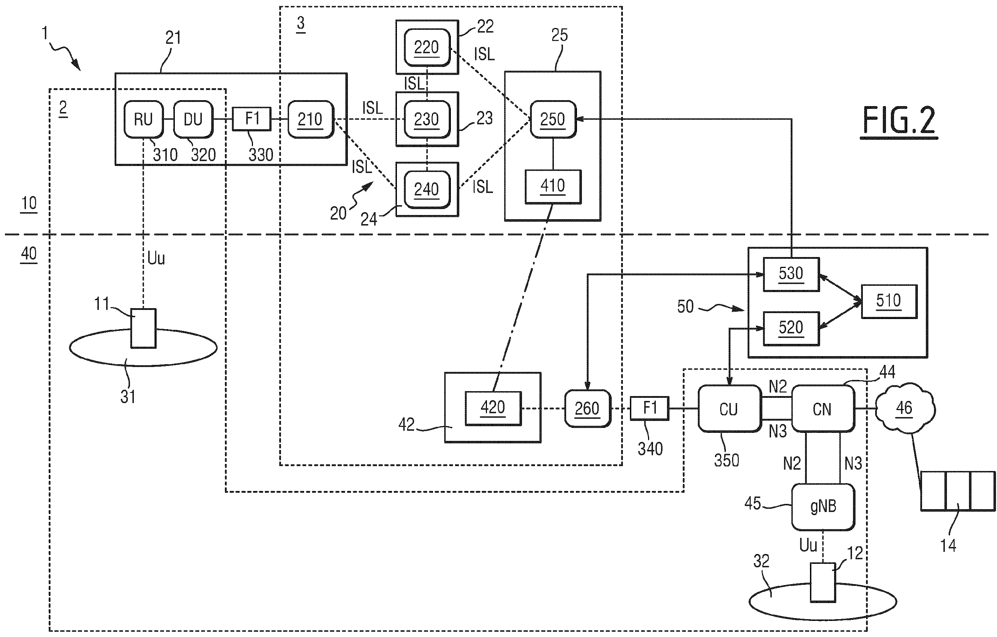

La figure 2 est une représentation schématique un mode de réalisation possible d'une infrastructure satellitaire mobile pour un réseau de communication cellulaire non-terrestre de cinquième génération conforme à l'invention.

L'infrastructure 1 permet à des équipements utilisateurs, comme le premier équipement utilisateur 11, d'accéder, via une interface air, à des services distants, comme par exemple la communication avec d'autres équipements utilisateurs, comme le second équipement utilisateur 12, ou des serveurs de données, comme le serveur de données 14.

L'infrastructure 1 comporte une composante satellitaire 10 et une composante sol 40.

La composante satellitaire 10 comporte une constellation de satellites. Par exemple, comme illustré sur la figure 2, la constellation comporte un premier satellite 21, un second satellite 22, un troisième satellite 23, un quatrième satellite 24 et un cinquième satellite 25.

Les satellites de la constellation de satellites sont connectés les uns aux autres pour former un réseau satellitaire 20 du type réseau maillé.

Chaque satellite constitue un noeud de ce réseau satellitaire 20.

Deux satellites en liaison sont reliés par une liaison de données - ISL (« Inter Satellite Link »).

Les communications sur le réseau satellitaire 20, c'est-à-dire le long des liaisons ISL, s'effectuent selon le protocole Ethernet.

Chaque satellite comporte une interface d'accès au réseau satellitaire 20.

Par exemple, les satellites 21 à 25 comportent chacun une interface réseau référencées 210, 220, 230, 240 et 250 respectivement.

Pour simplifier la description, on considère que ces interfaces réseau remplissent également une fonction de routeur sur le réseau 20, au lieu de considérer un composant dédié, séparé de l'interface réseau correspondante.

La figure 2 représente un instant du fonctionnement de l'infrastructure 1 pour lequel la partie basse du gNB embarquée à bord du premier satellite 21 dessert la cellule 31 et le cinquième satellite 25 est en visibilité de la station au sol 42 hébergeant la partie haute du gNB associé à la cellule 31.

Les différents satellites sont identiques entre eux. Chaque satellite dispose notamment des deux capacités, desservir une cellule et desservir une station au sol.

Le satellite 21 est plus particulièrement décrit dans ce qui suit dans sa capacité à établir un lien de service Uu avec un équipement utilisateur.

Le satellite 21 est un satellite de communication. Il embarque une charge utile intégrant les moyens matériels et logiciels nécessaires à la mise en œuvre des diverses fonctionnalités de communication.

Le satellite 21 comporte notamment des moyens antennaires 310 permettant de desservir au moins une zone de couverture au sol, ou cellules. Dans ce qui suit on considère, par souci de clarté, une unique cellule.

Un équipement utilisateur au sol, comme le premier équipement 11 situé dans la première cellule 31 peut alors établir une liaison de service Uu avec le satellite 21.

Conformément au découpage de la figure 1, la charge utile du satellite 21 comporte :
- une unité radio - RU, 310 ; et,
- une unité distribuée - DU, 320.

L'unité distribuée - DU, 320, est associée à une interface d'encapsulation/décapsulation embarquée, 330, l'unité distribuée - DU, 320, étant connecté, via ladite interface 330, au routeur bord d'extrémité 210.

Le satellite 25 est plus particulièrement décrit dans ce qui suit dans sa capacité à établir un lien Feeder avec la station au sol associée à la cellule 31.

Le satellite 25 embarque une charge utile intégrant les moyens matériels et logiciels nécessaires à la mise en œuvre des diverses fonctionnalités de communication avec les stations au sol.

Le satellite 25 comporte notamment une interface « d'alimentation » 410 pour la communication sans fil avec la composante sol 40, le long d'une liaison d'alimentation - Feeder. L'interface d'alimentation 410 est relié à l'interface 250.

La composante terrestre 40 comporte :
- une station au sol, 42, connectée à la composante satellitaire 10 par au moins une liaison Feeder, la station au sol 42 comportant une unité RF, 420, pour la communication avec l'un ou l'autre des satellites de la constellation présentant une interface d'alimentation 410, en visibilité à l'instant courant, par exemple le satellite 25 comme représenté sur la figure 2 ;
- un réseau terrestre, comportant une pluralité de routeurs sol, dont au moins un routeur sol d'extrémité 260 ;
- au moins une unité centralisée - CU au sol, 350, associée à une interface d'encapsulation/décapsulation au sol, 340, et connectée via ladite interface au routeur sol d'extrémité 260 ;
- un coeur de réseau - CN terrestre 44, auquel est connecté le CU 350 ;
- éventuellement, une ou plusieurs autres stations de base terrestres, comme le gNB 45 et/ou un réseau terrestre 46, comme l'Internet, connectés au CN 44.

L'infrastructure 1 comporte N cellules fixes et prédéfinies. L'infrastructure 1 comporte donc N CUs au sol, chaque CU au sol étant associé à une unique cellule. Les différents CU au sol sont hébergés dans les différentes stations au sol, une station au sol pouvant héberger plus d'un CU.

Par exemple la station au sol 40 comporte un CU 350 associé à la cellule 31.

Un CU d'une station au sol est connecté à un CN.

Par exemple, le CU 350 est connecté au CN 44, d'une part, via sa couche RRC et une liaison N2, à la couche AMF du CN et, d'autre part, via sa couche SDAP et une liaison N3, à la couche UPF du CN.

Le CN 44 comporte l'ensemble des services d'un coeur de réseau 5G. Il est par exemple connecté au gNB terrestre 45 et au réseau terrestre 46. Le gNB 45 dessert par exemple une cellule au sol 32, ce qui permet à un équipement utilisateur 12, présent dans cette cellule, d'établir un lien utilisateur Uu avec le gNB 45. Le réseau terrestre 46 permet l'accès à différents services, notamment fournies par des serveurs, tel que le serveur de données 14 connecté au réseau terrestre 46.

Une station de base gNB est constituée de l'association d'une partie basse à bord d'un satellite et d'une partie haute au sol. Dans l'exemple du présent mode de réalisation, la partie basse de gNB est constituée du RU et du DU tandis que la partie haute de gNB est constitué du CU. Dit autrement, à l'instant illustré sur la figure 2, le CU 350 est associé au DU 320 et au RU 310 pour former ensemble un gNB desservant la cellule 31.

L'unité 330 d'une part et l'unité 340 d'autre part permettent de tagger les données au format 5G NTN avec une clé, comme cela sera décrit plus précisément ci-dessous.

La composante terrestre 40 comporte en outre un centre de contrôle 50 de gestion des ressources de l'infrastructure 1, permettant de piloter de manière cohérente les ressources de la couche 5G 2 et celles de la couche de transport 3 pour rendre possible les interactions entre ces couches de manière à assurer la continuité de la communication.

De préférence, le centre de contrôle 50 est un calculateur comportant des moyens de calcul, tels qu'un processeur, et des moyens de mémorisation, tels qu'une mémoire. La mémoire stocke notamment les instructions de programmes d'ordinateurs permettant de munir le centre 50 d'un composant d'allocation de ressources 510, d'un composant de gestion des ressources radio 520, et de gestion des ressources du réseau de transport 530.

Pour router les données entre les deux parties de gNB de la couche 5G 2, bord et sol, l'infrastructure 1 comporte une couche de transport 3.

Dans le mode de réalisation de la figure 2, la couche de transport comporte le réseau satellitaire 20, ainsi que le routeur au sol 260, relié au réseau satellitaire 20 via le lien Feeder.

Le CU est ainsi connecté (via l'unité 340) à un routeur d'entrée sur le réseau de transport, qui est le routeur 260 dans le mode de réalisation de la figure 2. Ce routeur est dénommé routeur sol, puisqu'il permet la connexion au réseau de transport de la partie sol du gNB.

Parallèlement, le DU est connecté (via l'unité 330) à un routeur d'entrée sur le réseau de transport, qui est un routeur de la constellation, en l'occurrence le routeur 210 du satellite 21. Ce routeur est dénommé routeur bord, puisqu'il permet la connexion au réseau de transport de la partie bord du gNB.

En variante, le CU et l'unité 340 pourraient être connectés au réseau satellitaire 20, par un réseau au sol, entre l'unité 340 et l'unité RF 420. La couche de transport comporterait alors, en plus du réseau satellitaire, ce réseau au sol.

La couche de transport 3 met en œuvre une technologie de routage respectant le standard MPLS.

Selon cette technologie de routage, un tunnel MPLS est établi de bout en bout, c'est-à-dire entre le routeur sol et le routeur bord. Les routeurs sol et bord permettent d'encapsuler/décapsuler les données au format 5G NTN, correctement taguées par les unités de conversion 330 et 340, vers le format MPLS pour permettre leur transport dans la couche de transport 3.

Le routage MPLS en tant que tel se limite aux routeurs de la constellation, entre deux routeurs de bordure (entrée et sortie) du réseau satellitaire 20, c'est-à-dire les routeurs 250 et 210 sur la figure 2.

La technologie de routage MPLS est implémentée car elle est compatible avec les options de séparation évoquées ci-dessus.

La technologie de routage MPLS est également implémentée car elle offre un mécanismes d'ingénierie du trafic. L'ingénierie du trafic sur un réseau IP/MPLS est définie comme l'ensemble des moyens et des procédures pour l'évaluation et l'optimisation des performances opérationnelles de ce réseau IP/MPLS.

La technologie de routage MPLS permet également, de manière particulièrement avantageuse, une gestion des pannes et des diverses dégradations pouvant affecter le réseau de transport (en particulier l'influence de la météorologie, de l'orientation des satellites par rapport au soleil, de l'autonomie des satellites, etc.).

Mais surtout, la technologie de routage MPLS est implémentée car elle s'appuie sur un routage du type chemin à commutation sur étiquette - LSP (« Label Switched Path »). Cela permet de grouper les flux de données par classe de routage équivalente afin de les transporter en suivant un chemin identique. Notamment, les flux de données peuvent être regroupés en services réseaux point à point sur le réseau de transport MPLS, appelés pseudo-fil - PW (« PseudoWire »). On attribue à chaque pseudo-fil une étiquette de service dont l'unicité est garantie au sein des routeurs.

La présente invention retient l'hypothèse de cellules fixes au sol.

Chaque cellule est identifiée par un identifiant de cellule, ID_Cell et chaque tranche réseau à une cellule est identifiée par un identifiant de tranche, ID_Tranche.

A chaque cellule est associée un CU particulier d'une station au sol. Un CU supporte une ou plusieurs interfaces F1. Chaque interface F1 supportée par un CU constitue un point d'extrémité, qui est identifié par un identifiant de point d'extrémité de CU, CU_EP_F1. L'identifiant CU_EP_F1 combine par exemple une adresse IP ainsi que des identifiants additionnels qui peuvent être un identifiant VLAN, une étiquette MPLS, une étiquette Segment Routing (SID) ou une étiquette SRv6.

Une première table de CU, T1, associe ainsi à chaque couple d'identifiants ID_Cell et ID_Slice, un identifiant de point d'extrémité CU_EP_F1 unique.

Un CU est connecté à un routeur sol, qui est identifié par une adresse IP sur le réseau de transport, IP_Routeur_Sol.

A un instant donné t, une cellule ID_Cell est servie par un DU particulier. Un DU supporte une ou plusieurs interfaces F1. Chaque interface F1 supportée par un DU constitue un point d'extrémité, qui est identifié par un identifiant de point d'extrémité de DU, DU_EP_F1. L'identifiant DU_EP_F1 combine par exemple une adresse IP et des identifiants additionnels comme un identifiant VLAN, une étiquette MPLS, une étiquette Segment Routing (SID) ou une étiquette SRv6.

A un instant t donné, une deuxième table de DU, T2, associé ainsi à couple d'identifiants ID_Cell et ID_Slice, un identifiant de point d'extrémité DU_EP_F1 unique.

Un DU est connecté à un routeur bord, qui est identifié par une adresse IP sur le réseau de transport, IP_Routeur_Bord.

Un service réseau, identifié par l'identifiant ID_Service_Réseau, est défini pour établir une connectivité bidirectionnelle entre les identifiants d'extrémité CU_EP_F1 et DU_EP_F1 afin de transporter le trafic de la tranche ID_Slice de la cellule ID_Cell à travers l'interface F1 sur le réseau de transport. Le service réseau peut être un tunnel point à point comme un pseudo-fil délivré à travers le réseau de transport.

A un instant t donné, une troisième table T3 est donc définie qui associe à chaque identifiant ID_Service_Réseau, un identifiant CU_EP_F1 et un identifiant DU_EP_F1. Cette table permet donc de mapper les ressources du réseau de communication cellulaire et les ressources du réseau de transport.

On définit un chemin ID_Chemin entre un routeur sol IP_Routeur_Sol et un routeur bord IP_Routeur_bord
Avantageusement, on peut définir un ensemble de chemins différents ID_Grp_Chemins entre ces deux routeurs afin de supporter des mécanismes d'ingénierie de trafic.

Une quatrième table T4 est alors définie qui associe à chaque identifiant ID_Chemin, l'identifiant ID_Grp_Chemins du groupe de chemins auquel il appartient, l'identifiant du routeur sol IP_Routeur_Sol et l'identifiant du routeur bord IP_Routeur_Bord.

En variante, la définition d'un chemin pourrait être faite en définissant d'une part une chemin sur le réseau de transport au sol et d'autre part un chemin sur le réseau de transport satellitaire, ces deux chemins étant raboutés au niveau des routeurs connectés par un lien Feeder.

Les chemins peuvent être des tunnels de type MPLS LSP, de type Segment - Routing-Traffic Engineering LSP (SR-TE LSP), de type Traffic Engineering-MPLS LSP (TE-MPLS LSP) ou des tunnels SRv6 ou des tunnels IP (GRE, VxLAN, IPinIP).

A chaque instant t, une cinquième table T5, qui est une table de routage mémorisée par chaque routeur de l'infrastructure, est définie permettant d'associer un service réseau, ID_Service_Réseau à un chemin dans le groupe ID_Grp_Chemins.

Ainsi, pour une communication montante du CU à la cellule, l'unité CU 350 consulte la première table T1 pour identifier l'interface F1 associé au couple ID_Cell, IDSlice destinataire des paquets et transmet les paquets vers cette interface F1.

Au niveau de l'interface F1, l'unité 340 encapsule les paquets provenant du CU, avec l'identifiant de CU correspondant, CU_EP_F1 (connue de l'interface F1) et transmet les paquets encapsulés au routeur sol 260.

Le routeur sol 260 classifie les paquets encapsulés en fonction des identifiants de DU qu'ils portent, CU_EP_F1, afin de les affecter à un service réseau, ID_Service_Réseau, spécifique en consultant la troisième table T3. Le routeur sol 260 ajout à chaque paquet encapsulé l'étiquette du service réseau correspondant, ID_Service_Réseau.

Les paquets sont ensuite routés à travers le réseau de transport du routeur sol 260 vers le routeur bord 210 en suivant le chemin ID_Chemin associé au service réseau ID_Service_Réseau, conformément aux indication de la table de routage T5.

En consultant la troisième tale T3, le routeur bord 210 route les paquets en fonction de leur étiquette de ID_Service_Réseau vers l'unité 330 correspondant à l'identifiant DU_EP_F1, tout en retirant l'étiquette de service réseau préalablement.

L'unité 330 identifie la cellule et la tranche réseau auxquels les données cellulaires appartiennent en fonction de l'identifiant DU_EP_F1 des paquets reçus, en consultant la seconde table T2.

Le DU peut alors transmettre chaque paquet vers l'UE 11 via le RU 310.

De manière symétrique, pour une communication montante (du plan de contrôle ou du plan de données) du DU 320 vers le CU 350, les paquets de données cellulaires sont identifiés par les identifiants de cellule ID_Cell et de tranche réseau ID_Slice.

Le DU 320 consulte la seconde table T2 pour identifier l'interface F1 associé au couple ID_Cell, IDSlice et transmet les paquets vers l'interface F1 identifiée.

Les paquets sont encapsulés par l'unité 330 associée à l'interface F1 identifiée, avec l'identifiant DU_EP_F1 (connu de l'unité 330) et transmet les paquets encapsulés au routeur bord 210.

Le routeur bord 210 sélectionner le service réseau associé aux paquets encapsulés reçus en fonction de leur identifiant DU_EP_F1, en consultant la troisième table T3. Le retour bord 210 ajoute aux paquets l'étiquette ID_Service_Réseau du service sélectionné.

Les paquets ainsi obtenus sont routés à travers le réseau de transport du routeur bord 210 vers le routeur sol 260, en suivant le chemin associé au service réseau sélectionné, d'après la table de routage T5.

Le routeur sol 260 transmet les paquets reçus en fonction de leur étiquette ID_Service_Réseau vers l'unité 340 associée à cette étiquette dans la troisième table T3, tout en retirant préalablement l'étiquette de service réseau.

L'unité 340 identifie la cellule et la tranche réseau auxquels les données cellulaires appartiennent en fonction de l'identifiant CU_EP_F1 des paquets reçus et en consultant la première table T1. Elle transmet ces données au CU 350 après retrait de l'identifiant CU_EP_F1.

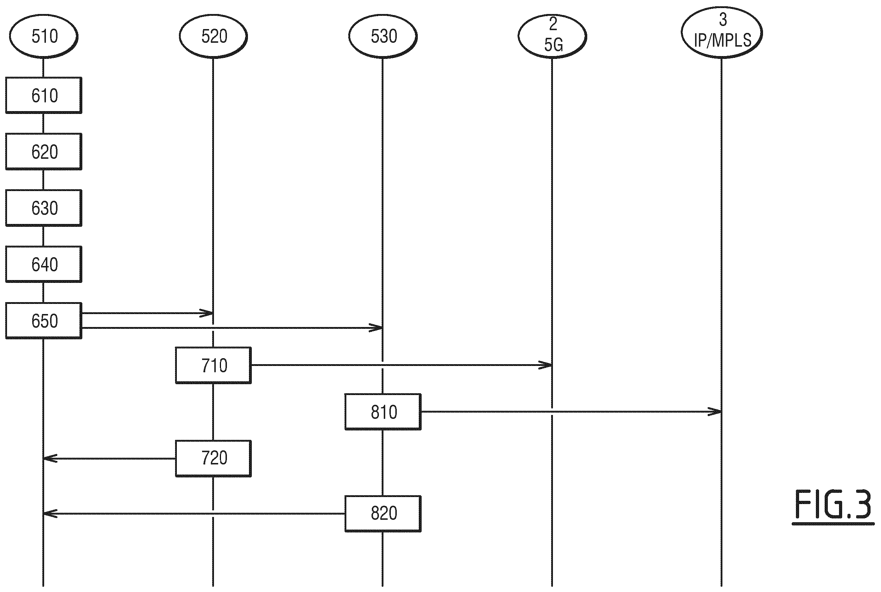

La figure 3 illustre la manière dont fonctionne le centre de contrôle 50 pour piloter l'infrastructure 1, notamment en définissant, à chaque instant, les différentes tables nécessaires aux échanges de paquets et en les transmettant aux composants de l'infrastructure utilisant ces tables.

Le contre de contrôle 50 est en communication d'une part avec les unités sol CU et bord DU/RU du réseau de communication cellulaire 2 et d'autre part les routeurs du réseau de transport 3. Ces communications s'effectuent par exemple sur un plan de contrôle le long des liaisons existantes entres les éléments de l'infrastructure.

Le composant allocateur de ressources ou orchestrateur 510 est en charge d'élaborer un plan de mission.

Le plan de mission indique, pour une période d'exploitation de l'infrastructure 1, à chaque pas de temps de fonctionnement de l'infrastructure, la configuration dans laquelle doit se trouver l'infrastructure.

Pour ce faire, dans une étape 610, le composant orchestrateur 510 définit les ressources radio 5G à implémenter dans les satellites, c'est-à-dire les paramètres de configuration du ou de chaque composant DU. Les paramètres tels que la ou les fréquences utilisées et la canalisation retenues pour chaque cellule 5G NR sont définis à ce niveau.

Pour cette étape, le composant orchestrateur 510 a reçu l'expression des besoins de communication sous la forme d'un ensemble de services logiques entre des points de présence au sol (dit POPs ou « Point Of Presence ») et des couvertures géographiques fixes au sol. Ces couvertures géographiques vont héberger les terminaux de la constellation et correspondent par exemple à une collection de cellules fixes au sol qui sont chacune identifiée par un couple (ID_Cell, ID_Slice). Le service logique entre les POPs et les zones géographiques précise les besoins en bande passante suivant les caractéristiques usuelles (bande passante garantie, best effort, latence,...).

Dans une étape 620, le composant 510 élabore le plan de mission à partir d'une cartographie (qui définit la couverture géographique au sol par un ensemble de cellules) et des éphémérides de la constellation (qui donne la position instantanée de chaque satellite).

Ces informations permettent de déterminer, pour chaque cellule ID_Cell utilisée à l'instant t, quel satellite desservira cette cellule.

A partir de ces informations, dans une étape 630, le composant orchestrateur 510 alloue à chaque service logique, un service réseau ID_Service_Réseau. Cette allocation prend la forme d'une table d'allocation. Le composant orchestrateur 510 peut prendre cette décision en fonction d'une connaissance partagée entre l'orchestrateur 510 et le gestionnaire 520 qui met à jour, à chaque instant t, la table de routage T5. Cette connaissance partagée peut s'appuyer sur le provisionnement de paramètres dans le composant orchestrateur 510 qui lui permet de déterminer la table d'allocation pour un satellite donné. Alternativement, elle peut aussi résulter d'un échange dynamique entre le composant orchestrateur 510 et le gestionnaire 520 : le composant orchestrateur 510 peut allouer un identifiant DU_EP_F1 à chaque couple (ID_Cell, ID_Slice) servi par un satellite.

Dans une étape 640, le composant orchestrateur 510 sélectionne, pour chaque service réseau ID_Service_Réseau, un chemin ID_Chemin au sein du réseau de transport dans le groupe de chemins ID_Grp_Chemins associés à l'identifiant ID_Service_Réseau dans la quatrième table T4.

Cette sélection est faite en fonction des objectifs requis par le service logique correspondant (comme par exemple le débit garanti, le débit maximal, le délai maximal, la jigue, le taux de perte de paquets). Pour ce faire, le composant orchestrateur 510 utilise une topologie du réseau de transport, qu'il peut recevoir du composant 530 ou en traitant directement des informations envoyées par un routeur sol.

Une fois le plan de mission construit, le composant orchestrateur 510 le transmet (étape 650) d'une part au composant 530 et d'autre part au composant 520.

Le plan de mission contient par exemple des informations de type: liste de cellules à créer ou supprimer dans chaque satellite, l'allocation à chaque cellule d'un faisceau du système antennaire du satellite, la liste de services réseaux avec leur chemin dans la constellation, etc.

Dans une étape 710, le composant de gestion des ressources radio 520, qui est identifiable à un composant SMO/RIC (« Service Management and Orchestration / RAN intelligent Controller » ou « gestion et orchestration des services / Contrôleur intelligent RAN ») suivant le standard O-RAN, implémente la partie du plan de mission le concernant.

De manière planifiée, pour chaque pas de temps, il élabore et transmet des commandes aux éléments de la couche 5G 2 afin de configurer convenablement les ressources radio, notamment à bord des satellites (paramétrage des composants DU/RU et appariement entre DU/RU à bord et CU au sol pour former un gNB).

Par ailleurs, dans une étape 720, le composant de gestion des ressources radio 520 maintient régulièrement à jour des informations d'utilisation des ressources radio, à destination du composant orchestrateur 510.

Dans une étape 810, le composant de gestion des ressources du réseau 530, qui est identifiable à un composant SDNC (« Software-Defined Networking Controller » ou contrôleur de mise en réseau définie par logiciel), implémente la partie du plan de mission concernant le réseau de transport. Par exemple il détruit les pseudo-fils obsolètes, maintient les pseudo-fils en vigueur, et crée les nouveau pseudo-fils nouveau pour tenir compte de l'évolution au cours du temps des appariements DU-CU.

De manière planifiée, pour chaque pas de temps, il élabore et transmet des commandes aux éléments de la couche de transport 3 afin de configurer convenablement les ressources du réseau de transport, notamment la table de routage T5 pour définir le chemin associé à chaque service réseau au niveau de chaque routeur.

Par ailleurs, dans une étape 820, le composant de gestion des ressources réseau 530 maintient régulièrement à jour la vision de la topologie du réseau IP/MPLS, à destination du composant orchestrateur 510.

De nombreuses variantes sont envisageables notamment en ce qui concerne l'infrastructure et son orchestration à chaque instant par le moyen de contrôle 50.

En particulier, une station au sol peut être associée à plusieurs CU et/ou un CU peut être associé à plusieurs stations au sol. Cela permet d'introduire différents scenarios de routage, comme par exemple:
- incident : le lien Feeder entre un satellite et une station au sol n'est pas utilisable (à cause de la pluie par exemple) et le moyen de contrôle va alors choisir un chemin pour les paquets entre un CU et un DU qui passe par un autre lien Feeder entre un autre satellite et une autre station au sol.
- association entre un CU et un DU : quand un satellite établit un nouveau lien Feeder avec une nouvelle station sol, le moyen de contrôle et le réseau 5G établissent une nouvelle interface F1 entre le DU et le CU associé à cette nouvelle station au sol et désalloue l'interface F1 entre le DU et le CU associé à la précédente station au sol.

La présente infrastructure offre la capacité de garantir la continuité d'un service logique et de monitorer ce service logique en combinant les données sur les services réseaux qui le servent successivement.

La présente infrastructure offre des mécanismes de haute disponibilité et d'ingénierie du trafic. Elle est compatible des différentes manière de répartir une station de base entre sol et bord. Elle permet de prendre en compte la dynamique des constellations LEO et MEO (changement fréquent de satellite servant une cellule au sol, changement fréquent de satellite servant une station au sol, mode de fonctionnement dégradé de l'infrastructure).

## Revendications

1. Infrastructure (1) de communication cellulaire non-terrestre, comportant une composante satellitaire (10) et une composante au sol (40),
la composante satellitaire comportant une constellation de satellites (21,22, 23, 24, 25), chaque satellite embarquant un routeur bord, les routeurs bord formant entre eux un réseau satellitaire (20) du type réseau maillé,
la composante au sol comportant : un réseau terrestre, comportant une pluralité de routeurs sol (260) ; et une station au sol (42) connectée d'une part au réseau terrestre et d'autre part à un satellite de la constellation de satellites par un lien d'alimentation,
**caractérisé en ce que** l'infrastructure comporte un réseau de communication cellulaire (2), comportant : un réseau coeur (44) faisant partie de la composante sol ; une pluralité d'unités bord ; et une pluralité d'unités sol, chaque unité bord de la pluralité d'unités bord étant embarquée à bord d'un satellite de la constellation de satellites et connectée à un routeur bord d'extrémité du réseau satellitaire, chaque unité sol de la pluralité d'unités sol, qui fait partie de la composante au sol, étant connectée entre un routeur sol d'extrémité du réseau terrestre et le réseau cœur, une station de base désagrégée résultant de l'appariement, de part et d'autre d'une interface normalisée, d'une unité bord (RU, DU) de la pluralité d'unités bord et d'une unité sol (CU) de la pluralité d'unités sol ;
**en ce que** l'infrastructure comporte un réseau de transport (3), support de l'interface normalisée de chaque station de base désagrégée présente dans le réseau de communication cellulaire (2), le réseau de transport agrégeant le réseau satellitaire et le réseau terrestre reliés l'un à l'autre par la liaison d'alimentation, le réseau de transport permettant de définir, pour chaque station de base désagrégée présente dans le réseau de communication cellulaire (2), un chemin entre le routeur sol d'extrémité (260) connecté à l'unité sol (CU) de ladite station de base désagrégée et le routeur bord d'extrémité (210) connecté à l'unité bord (RU, DU) de ladite station de base désagrégée, le réseau de transport mettant en œuvre un protocole de routage du type IP/MPLS ; et,
**en ce que**, en considérant que des pseudo-cellules du réseau de communication cellulaire (2) sont fixes et prédéfinies, et que chaque pseudo-cellule est associée à une unité sol de la pluralité d'unités sol, l'infrastructure comporte un centre de contrôle (50) adapté pour établir un plan de mission, le plan de mission indiquant, pour chaque pseudo-cellule, à quel instant une unité bord (RU, DU) parmi la pluralité d'unités bord desservira ladite pseudo-cellule, ladite unité bord étant ainsi appariée avec l'unité sol associée à la pseudo-cellule pour constituer une station de base désagrégée, et pour commander, à chaque instant, une configuration des ressources du réseau de communication cellulaire (2) et une configuration des ressources du réseau de transport (3) pour réaliser le plan de mission et permettre les échanges de paquets de données entre la pseudo-cellule et l'unité sol (CU) associée, le contre de contrôle (50) étant en communication d'une part avec les unités sol et bord du réseau de communication cellulaire (2) et d'autre part avec les routeurs du réseau de transport (3),
une pseudo-cellule étant une cellule, une cellule associée à une tranche, une cellule associée à une tranche et à un utilisateur, ou une cellule associée à une tranche et à un utilisateur et à une qualité de service, une tranche résultant de la segmentation du réseau de communication cellulaire (2) en une pluralité de tranches.

2. Infrastructure selon la revendication 1, dans laquelle le réseau de communication cellulaire est du type 5G NTN ou du type DVB.

3. Infrastructure selon la revendication 1 ou la revendication 2, dans laquelle une séparation entre une unité sol et unité bord d'une station de base désagrégée est une séparation couche haute et l'interface normalisée est l'interface F1.

4. Infrastructure selon la revendication 1 ou la revendication 2, dans laquelle une séparation entre une unité sol et unité bord d'une station de base désagrégée est une séparation couche basse et l'interface normalisée est l'interface « OpenFrontHaul ».

5. Infrastructure selon l'une quelconque des revendications 1 à 4, dans laquelle le centre de contrôle (50) définit, à chaque instant, une pluralité de services réseau sur le réseau de transport, un service réseau étant associé à chaque paire constituée d'une unité bord et d'une unité sol, qui sont appariées l'une à l'autre pour former une station de base désagrégée, pour acheminer des paquets de données entre ladite unité bord et ladite unité sol.

6. Infrastructure selon la revendication 5, dans laquelle un service réseau de la pluralité de services réseau est un service réseau point à point sur le réseau de transport, ou pseudo-fils, entre le routeur bord d'extrémité connecté à l'unité bord (RU, DU) et le routeur sol connecté à l'unité sol (CU).

7. Infrastructure selon la revendication 5 ou la revendication 6, dans laquelle le centre de contrôle (50) reçoit un ensemble de services logiques, chaque service logique exprimant des besoins de communication et étant associé à au moins un service réseau.

8. Infrastructure selon l'une quelconque des revendications 5 à 7, dans laquelle le centre de contrôle (50) comporte un composant d'allocation de ressources (510), un composant (520) de gestion des ressources du réseau de communication cellulaire, et un composant (530) de gestion des ressources du réseau de transport.

9. Infrastructure selon l'une quelconque des revendications 1 à 7, dans laquelle la constellation de satellite est une constellation non géostationnaire, de satellites en orbite basse ou de satellites en orbite moyenne.
